(19) Europäisches Patentamt
European Patent Office
Office européen des brevets

(11) **EP 2 088 636 A1**

(12) **EUROPEAN PATENT APPLICATION**
published in accordance with Art. 153(4) EPC

(43) Date of publication:
**12.08.2009 Bulletin 2009/33**

(51) Int Cl.:
**H01M 4/06** *(2006.01)* **H01M 4/50** *(2006.01)*

(21) Application number: **07829728.0**

(22) Date of filing: **12.10.2007**

(86) International application number:
**PCT/JP2007/069992**

(87) International publication number:
**WO 2008/062614 (29.05.2008 Gazette 2008/22)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **22.11.2006 JP 2006315225**

(71) Applicant: **Panasonic Corporation**
**Kadoma-shi**
**Osaka 571-8501 (JP)**

(72) Inventors:
• **NUNOME, Jun**
**Chuo-ku, Osaka 540-6207 (JP)**

• **KATO, Fumio**
**Chuo-ku, Osaka 540-6207 (JP)**
• **SHIMAMURA, Harunari**
**Chuo-ku, Osaka 540-6207 (JP)**

(74) Representative: **Grünecker, Kinkeldey, Stockmair & Schwanhäusser**
**Anwaltssozietät**
**Leopoldstrasse 4**
**80802 München (DE)**

(54) **ALKALINE BATTERY**

(57) An alkaline battery includes a positive electrode containing as a positive electrode active material manganese dioxide and nickel oxyhydroxide, and when the manganese dioxide is heated, a weight reduction percentage of the manganese dioxide at a temperature within a range of 100 °C or more and 400 °C or less is 3.8 wt% or more. When the manganese dioxide is subjected to X-ray powder diffraction measurement, a peak position of a diffraction plane with Miller indices of (110) is 20.5 degrees or more and 21.7 degrees or less and a ratio (I (130)/I(021)) of a peak intensity I (130) of a diffraction plane with miller indices (130) to a peak intensity I(021) of a diffraction plane with Muller indices of (021) is 0.1 or less.

FIG. 1

## Description

TECHNICAL FIELD

The present disclosure relates to an alkaline battery using as a positive electrode active material manganese dioxide and nickel oxyhydroxide.

BACKGROUND ART

In recent years, applications of primary batteries such as alkaline manganese batteries (hereinafter referred to as "alkaline batteries") have been expanded. For example, there are an increased number of cases where primary batteries are used for devices such as digital still cameras which require high load discharge performance (i.e., high discharge performance exhibited at a time of high load discharge).

As an example of such batteries, as described in Patent Document 1, an alkaline battery using manganese dioxide and nickel oxyhydroxide (hereinafter referred to as a "nickel-manganese alkaline battery") can be used to improve the high load discharge performance. In such nickel-manganese battery, known electrolytic manganese dioxide (gamma-manganese dioxide) is usually used as manganese dioxide.

As in Patent Document 2, to suppress deterioration of high load discharge performance in a nickel-manganese alkaline battery after being stored at high temperature, use of manganese dioxide having a potential of 270 mV or more has been suggested. The technique disclosed in Patent Document 2 relates to a method in which the valence of manganese in known gamma-manganese dioxide is increased by acid treatment and this method is used to achieve manganese dioxide having a potential close to the potential of nickel oxyhydroxide. Moreover, to prevent deterioration of the high load discharge performance, as in Patent Document 3, adding zinc oxide or calcium hydroxide to a positive electrode mixture has been proposed.

To improve the high load discharge performance, for example, in Patent Document 4, it is proposed to use of manganese dioxide of which a weight reduction is 2.7 wt% or more in a temperature range of 200 °C or more and 400 °C or less when manganese dioxide is heated. In Patent Document 4, it is described that when such manganese dioxide is used, hydrogen ions can be easily diffused in manganese dioxide. However, in Patent Document 4, nickel oxyhydroxide is not used as a positive electrode active material, and thus, a storage characteristic (i.e., the capability of maintaining initial discharge performance of the nickel-manganese alkaline battery even after storage) of a nickel-manganese alkaline battery is not described at all.

Patent Reference 1: Japanese Published Application No. 2006-12670
Patent Reference 2: Japanese Published Application No. 2003-234107
Patent Reference 3: Japanese Published Application No. 2001-15106
Patent Reference 4: Japanese Published Application No. 2004-186127

DISCLOSURE OF THE INVENTION

PROBLEMS WHICH THE INVENTION IS TO SOLVE

As has been describe, when nickel oxyhydroxide is used for a positive electrode active material, the high load discharge performance can be improved. However, when nickel oxyhydroxide is used as a positive electrode active material, a storage characteristic is largely deteriorated, compared to the case where nickel oxyhydroxide is not used for a positive electrode active material. Deterioration of storage characteristic is particularly remarkable in the case where the positive electrode active material of nickel oxyhydroxide is stored at high temperature.

In view of the above-described problems, the present invention has been devised and it is therefore an object of the present invention to improve the high load discharge performance while suppressing deterioration of the storage characteristic.

SOLUTION TO THE PROBLEMS

An alkaline battery according to the disclosure of the present invention includes a positive electrode containing, as a positive electrode active material, manganese dioxide and nickel oxyhydroxide and, when the manganese dioxide is heated, a weight reduction percentage of the manganese dioxide at a temperature within a range of 100 °C or more and 400 °C or less is 3.8 wt% or more.

The weight reduction percentage of manganese dioxide in the temperature range of 100 °C or more and 400 °C or less (hereinafter referred to merely as "the weight reduction percentage of manganese dioxide") is normally measured using a thermogravimetric analyzer, and can be defined using the following Formula 1.

[Formula 1]

$$\text{(Weight reduction percentage of manganese dioxide)} = \{W_{(100°C)} - W_{(400°C)}\} / W_{(RT)}$$

where $W_{(100°C)}$ and $W_{(400°C)}$ are manganese dioxide weights at 100 °C and 400 °C, respectively, and $W_{(RT)}$ is the weight of manganese dioxide at room temperature, or more specifically, before heating.

In other words, the alkaline battery of this disclosure includes, as a positive electrode active material, manganese dioxide and nickel oxyhydroxide and, when the manganese dioxide is subjected to X-ray powder diffraction measurement, a peak position of a diffraction plane with Miller indices of (110) is 20.5 degrees or more and 21.7 degrees or less, and a ratio (I(130)/I(021)) of a peak intensity I (130) of a diffraction plane with Miller indices (130) to a peak intensity I(021) of a diffraction plane with Miller indices of (021) is 0.1 or less. That is, when the weight reduction percentage of manganese dioxide of the present disclosure is calculated, 3.8 wt% or less is obtained and, when X-ray powder diffraction measurement is performed to manganese dioxide of the present disclosure, the above-described peak position and peak intensity ratio are exhibited.

EFFECTS OF THE INVENTION

According to the disclosure of the present invention, the high load discharge performance can be improved and deterioration of the storage characteristic can be suppressed.

BRIEF DESCRIPTION OF THE DRAWINGS

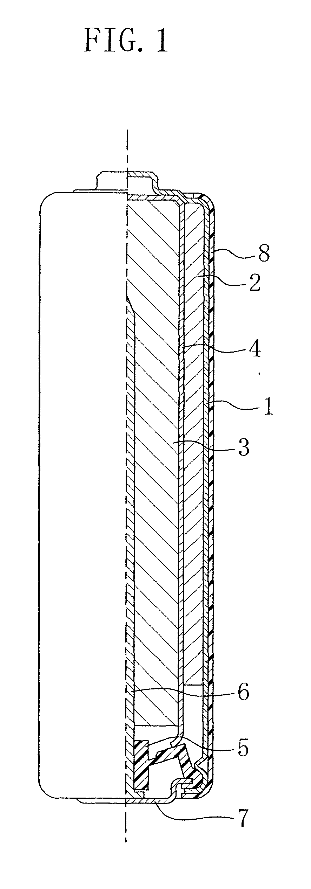

[FIG. 1] FIG. 1 is a cross-sectional view of an alkaline battery according to the disclosure of the present invention.

EXPLANATION OF REFERENCE NUMERALS

1 Battery case
2 Positive electrode mixture
3 Gelled negative electrode
4 Separator
5 Gasket
6 Negative current collector
7 Bottom plate
8 Exterior label

BEST MODE FOR CARRYING OUT THE INVENTION

The present inventors found that when in an alkaline battery using manganese dioxide and nickel oxyhydroxide as a positive electrode material (hereinafter referred to as a "nickel-manganese positive electrode material"), manganese dioxide (hereinafter referred to as "gamma-manganese dioxide") which has been conventionally used in a known alkaline battery is not used but manganese dioxide (hereinafter referred to as "epsilon-manganese dioxide") formed of smaller crystallites than crystallites of gamma-manganese dioxide is used as manganese dioxide, the battery is suitable for high load discharge and deterioration of the discharge performance after storage can be suppressed. Before describing the present invention, a reason why deterioration of the storage characteristic occurs in a nickel-manganese alkaline battery will be described.

The reason why a storage characteristic of an alkaline battery is deteriorated when a nickel-manganese positive electrode active material is used is that, because a standard potential of nickel oxyhydroxide is higher than a standard potential of manganese dioxide, electrons move from nickel oxyhydroxide to manganese dioxide and, as a result, self discharge occurs in the nickel-manganese positive electrode active material. Therefore, it can be presumed that if the occurrence of self discharge can be suppressed, deterioration of the storage characteristic of the alkaline battery can be suppressed.

Specifically, in a nickel-manganese positive electrode active material, nickel oxyhydroxide and manganese dioxide are in contact with each other and the standard potential of manganese dioxide is smaller than that of nickel oxyhydroxide. Therefore, electrons of nickel oxyhydroxide move to manganese dioxide and move in manganese dioxide. Each manganese dioxide particle is formed of many crystallites, and thus it is considered that electrons move in the manganese dioxide particles while repeating the step of moving in crystallites forming the manganese dioxide particles and the step of moving from one crystallite to another crystallite adjacent thereto. When electrons move from one crystallite to another crystallite adjacent thereto, electrons go over a grain boundary (i.e., a boundary between adjacent crystallites) and thus the step of moving from one crystallite to another crystallite adjacent thereto is presumed to be a rate-determining step.

Based on what has been described above, it is considered that, when contact of nickel oxyhydroxide with manganese dioxide is avoided in a nickel-manganese positive electrode active material, or when moving of electrons in manganese dioxide is suppressed, the occurrence of self discharge in the nickel-manganese positive electrode active material can be suppressed and, as a result, deterioration of a storage characteristic of an alkaline battery can be suppressed.

As a method for avoiding contact of nickel oxyhydroxide with manganese dioxide, for example, there is a method in which another compound is interposed between nickel oxyhydroxide and manganese dioxide. However, it is difficult to prepare a positive electrode active material so that another compound is interposed between nickel oxyhydroxide and manganese dioxide, and also when another compound is mixed in the positive electrode active material, the content rate of nickel oxyhydroxide and manganese dioxide in a positive mixture is reduced. Therefore, it is considered difficult to avoid contact of nickel oxyhydroxide with manganese dioxide.

Because the step in which electrons move from one crystallite to another crystallite adjacent thereto is a rate-determining step, as described above, in order to suppress moving of electrons in manganese dioxide, moving of electrons from one crystallite to another crystallite adjacent thereto can be suppressed. The present inventors focused on this point and completed the present invention. Hereinafter, epsilon-manganese dioxide will be described with comparison to gamma-manganese dioxide. An alkaline battery according to the disclosure of the present invention will be also described.

The present inventors assume that the following is the reason why a storage characteristic of an alkaline battery using, as manganese dioxide, not gamma-manganese dioxide but epsilon-manganese dioxide can be improved, though they have not determined with certainty.

Conventionally, gamma-manganese dioxide, epsilon-manganese dioxide and the like have been known as manganese dioxide. Each of gamma-manganese dioxide and epsilon-manganese dioxide is considered as a mix crystal of having a ramsdellite structure and a pyrolusite structure. However, as described above, epsilon-manganese dioxide is formed of smaller crystallites than crystallites of gamma-manganese dioxide. Therefore, an epsilon-manganese dioxide particle has a larger number of crystallites than that of a gamma-manganese dioxide particle, and the number of times which the step in which electrons move from one particle to another particle adjacent thereto is repeated is larger in epsilon-manganese dioxide than in gamma-manganese dioxide. As described above, since the step in which electrons move from one particle to another particle adjacent thereto is considered to be a rate-determining step, it can be presumed that if the number of times which this step is repeated is increased, moving of electrons in manganese dioxide can be suppressed and, as a result, the occurrence of self discharge in a nickel-manganese positive electrode active material can be suppressed.

To summarize the above, epsilon-manganese dioxide is formed of smaller crystallites than crystallites of gamma-manganese dioxide, and thus electrons which have moved from nickel oxyhydroxide to manganese dioxide move less easily in epsilon-manganese dioxide particles than in gamma-manganese dioxide particles. Therefore, when epsilon-manganese dioxide is used as manganese dioxide, the occurrence of self discharge in a nickel-manganese positive electrode active material can be suppressed, compared to the case where gamma-manganese dioxide is used as manganese dioxide. As a result, a storage characteristic can be improved.

A difference between epsilon-manganese dioxide and gamma-manganese dioxide is in the crystallite diameter. Therefore, if conditions for crystal growth are changed so that crystal growth is suppressed, compared to when gamma-manganese dioxide is produced, epsilon-manganese dioxide is produced. It is presumed that, because epsilon-manganese dioxide is formed using such production method, epsilon-manganese dioxide is inferior to gamma-manganese dioxide in terms of crystallinity. It is known that in gamma-manganese dioxide, some of manganese atoms are missing. Thus, it can be presumed that some of manganese atoms are missing also in epsilon-manganese dioxide and the amount of missing atoms is larger in epsilon-manganese dioxide.

In general, when manganese dioxide includes missing manganese atoms, protons are bound at sites where manganese atoms are missing. When manganese dioxide is heated, oxygen elimination is caused and the protons are released as water. Such protons are called structured water. As described above, if the amount of missing atoms is larger in epsilon-manganese dioxide than in gamma-manganese dioxide, it is considered that epsilon-manganese dioxide contains a larger amount of structured water than that contained in gamma-manganese dioxide. When the present inventors examined the amount of structured water, the weight reduction percentage of manganese dioxide was 3.8 wt% or more for epsilon-manganese dioxide, and 3.0 wt% or more and less than 3.8 wt% for gamma-manganese dioxide. Based on this result, the above-described hypothesis (that the amount of missing manganese atoms is larger in epsilon-manganese dioxide than in gamma-manganese dioxide) is considered correct.

Note that the weight reduction percentage of manganese dioxide can be calculated using the above-described formula (Formula 1) for each of epsilon-manganese dioxide and gamma-manganese dioxide.

It has been reported that the reason why some of manganese atoms are missing in manganese dioxide is that a structural disorder, so-called micro twinning, occurs during crystal growth, i.e., a crystal growth direction is reversed during crystal growth.

Based on what has been described above, the relationship between epsilon-manganese dioxide and gamma-manganese dioxide can be described in the following manner. The crystallite diameter of crystallites forming a particle is smaller in epsilon-manganese dioxide than in gamma-manganese dioxide and the amount of missing Mn atoms is larger in epsilon-manganese dioxide than in gamma-manganese dioxide. Hereinafter, the weight reduction percentage of manganese dioxide will be described.

In epsilon-manganese dioxide, the weight reduction percentage of manganese dioxide is preferably 3.8 wt% or more, and more preferably 4.0 wt% or more and 5.4 wt% or less. When the weight reduction percentage of manganese dioxide is, for example, less than 3.8 wt%, the amount of missing atoms in manganese is small and thus it is considered that crystallites are sufficiently grown. Accordingly, the number of particle boundaries can not be reduced, unlike gamma-manganese dioxide, and it is difficult to suppress the occurrence of self discharge in a nickel-manganese positive electrode active material. Therefore, when the weight reduction percentage of manganese dioxide is less than 3.8 wt%, the storage characteristic is not improved and, therefore, it is not preferable that the weight reduction percentage of manganese dioxide is less than 3.8 wt%.

When the weight reduction percentage of manganese dioxide exceeds, for example, 5.4 wt%, the amount of missing manganese atoms becomes too large and thus the initial discharge performance might be deteriorated. Therefore, it is not preferable that the weight reduction percentage of manganese dioxide is higher than 5.4 wt%. In the case of epsilon-manganese dioxide, in order to improve the initial discharge performance and the discharge performance after storage, the weight reduction percentage of manganese dioxide is preferably 3.8 wt% or more and 5.4 wt% or less, and more preferably 4.0 wt% or more and 5.4 wt% or less. Note that the weight reduction percentage of manganese dioxide is calculated by performing thermogravimetric analysis (TG) to manganese dioxide in powder form.

Epsilon-manganese dioxide has been described using the weight reduction percentage of manganese dioxide so far. Epsilon-manganese dioxide can be described also using peak positions and intensity ratio obtained by X-ray powder diffraction measurement.

When epsilon-manganese dioxide is subjected to X-ray powder diffraction measurement, a peak position of a diffraction plane with Miller indices (110) is 20.5 degrees or more and 21.7 degrees or less, and the ratio (I(130)/I(021)) of a peak intensity (I(130)) of a diffraction plane with Miller indices (130) to a peak intensity (I(021)) of a diffraction plane with Miller indices (021) is 0.1 or smaller. Hereinafter, the ratio (I(130)/I(021)) will be referred to merely as "peak intensity rate".

Peaks obtained when X-ray powder diffraction analysis is performed to manganese dioxide are described in detail, for example, in Y. Chabre and J. Pannetier, Prog. Solid St. Chem. Vol. 23(1), pp. 1-130, 1995. In this reference document, it is described that results of X-ray powder diffraction analysis vary according to the amount of missing atoms due to micro twinning, but gamma-manganese dioxide and epsilon-manganese dioxide are not clearly distinguished from each other in the results of X-ray powder diffraction analysis. Moreover, since manganese dioxide is a mix crystal of two different crystalline layers having a ramsdellite structure and a pyrolusite structure, it is difficult to determine from which crystal lattice array a certain diffraction peak results, and thus it is difficult to clearly theorize the results from the X-ray powder diffraction analysis of manganese dioxide. However, according to the examination conducted by the present inventors, it has been shown that if the peak position of a (110) plane and the intensity ratio I(130)/I(021) are within the above-described ranges, an occurrence rate of micro twinning is proper in terms of ensuring both the initial discharge performance and the discharge performance after storage. This agrees with the tendency described in the above-described reference document that according to the amount of defects due to micro twinning, diffraction peaks vary. That is, in manganese dioxide where the peak position of the (110) plane and the intensity ratio I(130)/I(120) are within the above-described ranges, the amount of missing manganese atoms was proper in terms of ensuring the initial discharge performance and the discharge performance after storage.

As has been described, when the peak position of the diffraction plane with Miller indices (110) is less than 20.5 degrees or larger than 21.7 degrees, or the peak intensity rate is more than 0.1, the amount of missing manganese atoms in manganese dioxide crystals is not proper in terms of ensuring the initial discharge performance and the discharge performance after storage. Therefore, it is not preferable that the peak position of the diffraction plane with Miller indices (110) is less than 20.5 degrees or larger than 21.7 degrees, or the peak intensity rate is more than 0.1.

Specifically, when the peak position of the diffraction plane with Miller indices (110) is less than 20.5 degrees, it is presumed that the amount of missing manganese atoms is too large and, as a result, the initial discharge performance might be deteriorated. Therefore, it is not preferable that the peak position of the diffraction plane with Miller indices (110) is less than 20.5 degrees.

Also, when the peak position of the diffraction plane with Miller indices (110) is larger than 21.7 degrees or the peak intensity ratio is larger than 1.0, the amount of missing atoms in manganese is too small and thus deterioration of discharge performance after storage can not be suppressed in the manner described above. Therefore, it is not preferable that the peak position of the diffraction plane with Miller indices (110) is larger than 21.7 degrees or the peak intensity ratio is larger than 1.0. Note that when X-ray powder diffraction measurement is performed, manganese dioxide in powder form may be used.

As has been described, the alkaline battery of this embodiment includes nickel oxyhydroxide as part of a positive electrode material, and thus its high load discharge performance can be improved.

Conventionally, when nickel oxyhydroxide is used for a positive electrode material, reduction in storage characteristic has been concerned. However, in the alkaline battery of this embodiment, as manganese dioxide, known gamma-manganese dioxide is not used but epsilon-manganese dioxide is used. Thus, reduction in storage characteristic can be suppressed. As a method for producing epsilon-manganese dioxide which has been described above, a method in which a sulfuric acid concentration, an electrolysis temperature, an electrolytic current density and the like in an electrolyte bath is changed, epsilon-manganese dioxide is synthesized, and then synthesized epsilon-manganese dioxide is pulverized using a pulverizer can be used. Also, epsilon-manganese dioxide may be synthetic manganese dioxide produced by chemical synthesis.

Hereinafter, a configuration of the alkaline battery of this embodiment and materials for a positive electrode, a negative electrode, an electrolyte and a separator 4 therein will be described in order.

As shown in FIG. 1, the alkaline battery includes a battery case 1 with one end (an upper end in FIG. 1) thereof sealed up. The battery case 1 functions as a positive electrode terminal and also a positive electrode current collector. In the battery case 1, a hollow cylindrical positive electrode is placed so as to touch an inner surface of the battery case 1. In a hollow portion of the positive electrode, a negative electrode is provided. A separator 4 is provided so as to be interposed between the positive electrode and the negative electrode. Each of the positive electrode, the negative electrode and the separator 4 contains an electrolyte.

An opening of the battery case 1 (a lower end in FIG. 1) is sealed with a bottom plate 7. A negative electrode current collector 6 having a nail like shape is electrically connected to the bottom plate 7, and a gasket 5 is physically connected to the negative electrode current collector 6 and the bottom plate 7. An outer surface of the battery case 1 is coated with an exterior label 8.

As described above, a positive electrode mixture preferably contains, as an active material, epsilon-manganese dioxide and nickel oxyhydroxide.

As for manganese dioxide, an average particle diameter of manganese dioxide in powder form is preferably 20 $\mu$m or more and 35 $\mu$m or less. However, the average particle diameter is not limited to the range.

As nickel oxyhydroxide, beta-nickel oxyhydroxide synthesized by oxidation of nickel hydroxide and having an average particle diameter of 7 $\mu$m or more and 17 $\mu$m or less is preferably used. However, some other synthesis method may be used as a method for synthesizing nickel oxyhydroxide, and also an oxidation method and a particle diameter of nickel hydroxide are not particularly limited. Moreover, Co, Zn, Mn, Ca, Mg or the like may be contained as a solute element.

The positive electrode mixture may contain, in addition to manganese dioxide and nickel oxyhydroxide, a small amount of ZnO, Ca(OH)$_2$ or some other compound for the purpose of preventing deterioration of performance of the battery while the battery is stored.

Furthermore, the positive electrode mixture preferably contains artificial graphite as a conducting agent. The positive electrode mixture may contain, as the conducting agent, a carbon-based conducting agent such as natural graphite, expanded graphite, fiber graphite, acetylene black and carbon black. To improve moldability of the positive electrode, the conducting agent may contain a binder such as polyethylene.

When a compact (or a pellet) of the positive electrode mixture is used, the positive electrode preferably has a porosity of 12% or more and 26% or less.

As the negative electrode, a gelled negative electrode obtained by mixing an electrolyte and a gelling agent made of sodium polyacrylate or the like with alloy powder containing zinc as a major component is used. A major component is not limited to zinc, and any metal which has a negative potential with respect to the positive electrode of this embodiment in an alkali solution, is capable of discharge and is stable can be used without any intended limitation.

As the alloy powder, alloy powder obtained by adding, for the purpose of increasing its anticorrosion property and stability, indium, bismuth, aluminum, calcium, barium, magnesium, strontium or some other metal, an organic additive, or an inorganic additive to a major component metal may be used. The particle size of the alloy powder is not particularly limited, but the alloy powder preferably contains 20 wt% or more and 35 wt% or less of fine powder having a particle size of 75 $\mu$m or less.

As the alkaline electrolyte, an aqueous solution containing KOH as a major component and also containing ZnO is preferably used. An amount of ZnO to be added is preferably 2 wt% or more and 10 wt% or less. Also, the alkaline electrolyte may contain sodium hydroxide, lithium hydroxide, calcium hydroxide or the like.

As the separator 4, alkali-resistant rayon, or an unwoven cloth containing pulp or the like is preferably used, but a cellophane or plastic unwoven cloth, a plastic porous film or the like may be used.

As the battery case 1, an LR6 (AA) size cylindrical battery case is preferably used, and also a cylindrical battery case of which an outer surface is plated with iron is preferably used. However, the size and shape of the battery case 1 are not particularly limited. A battery case made of plastic resin may be also used.

Note that the present inventors conducted measurements of the weight reduction percentage of manganese dioxide due to heating, and measurements using X-ray powder diffraction for manganese dioxide according to the following methods.

Example 1

More specific embodiments of the present invention will be described using Examples.

(1) Formation of manganese dioxide

A separable round-bottom flask with a volume of 2L (liter) was used as an electrolyte bath, a titanium plate with dimensions of 5 cm length × 5 cm width × 1 mm thickness was used as an anode, and platinum plates with dimensions of 5 cm length × 5 cm width × 0.2 mm thickness were used as cathodes. The two cathodes were placed with the anode interposed therebetween so that each of the cathodes was located at a distance of 2 cm from the anode.

An aqueous solution containing 50 g/L manganese sulfate and 35 g/L sulfuric acid was put in the electrolyte bath. Manganese sulfate and sulfuric acid used in this case were of special grade manufactured by Kanto Chemical Co. Inc. Since it was presumed that as an electrolytic reaction continues, the concentration of the aqueous solution in the electrolyte bath varies, an aqueous solution containing manganese sulfate was added to the electrolyte bath during the electrolytic reaction so that each of a manganese ion concentration and a sulfuric acid concentration was within ±7% of an associated one of the manganese ion concentration and the sulfuric acid concentration exhibited at an initial stage of the electrolytic reaction.

The temperature of the electrolyte bath was set to be 92 ± 1.0°C using a mantle heater, a continuous electrolyzation time was set to be 1 day, and a current corresponding to a current density of 50 A/m$^2$ was made to flow, thereby performing electrolyzation. After electrolyzation was finished, electrodeposited manganese dioxide was removed from the titanium plate and then was pulverized into coarse particles with a diameter of 250 $\mu$m or less. Ten grams of the pulverized manganese dioxide was stirred in 100 ml of ion exchange water and 0.1 N of sodium hydroxide was dropped thereto, thereby neutralizing to pH 6.

A slurry obtained by the neutralization was filtered using a Buclmer funnel, 100 ml of ion exchange water was poured into the funnel to rinse it, and then the slurry was dried at 90 °C for 2 hours. Lastly, obtained powder was pulverized using a stamp mill, the particle size of the powder was controlled using a JIS sieve, thereby obtaining powder manganese dioxide.

(2) Formation of positive electrode mixture

Thirty eight parts by weight of nickel oxyhydroxide powder, 6 parts by weight of artificial graphite (SP20 manufactured by Nippon Graphite Industries. Ltd.), 0.2 parts by weight of calcium hydroxide (as an additive for suppressing deterioration of storage characteristic) and 0.5 parts by weight of polyethylene powder (as a binder) were added to 56 parts by weight of manganese dioxide powder obtained in (1) and mixed using a mixer, thereby obtaining a positive electrode mixture.

(3) Formation of positive electrode pellet

Using a metal mold, the positive electrode mixture obtained in (2) was molded into a hollow cylindrical shape (a doughnut shape) by pressure forming.

(4) Formation of gelled negative electrode

An electrolyte and sodium polyacrylate (a gelling agent) were mixed so that the ratio by weight between them was 100:3, thereby obtaining a gelled electrolyte. The gelled electrolyte and zinc alloy powder were mixed so that the ratio by weight between them was 1:2, thereby obtaining a gelled negative electrode. Note that an alkaline aqueous solution containing 2.5 wt% of zinc oxide and having a potassium hydroxide concentration of 34 wt% was used as the electrolyte.

(5) Assembly of alkaline battery

According to the following procedures, a size AA alkaline battery of FIG. 1 was produced. Note that FIG. 1 is a front view of an alkaline battery and part thereof illustrates a partial cross-sectional view of the alkaline battery.
Specifically, two positive electrode pellets obtained in the above-described step were first inserted in a battery case 1 and the positive electrode mixture 2 was remolded by a pressurizing jig so as to be closely attached to an inner wall of the battery case 1.
Next, a separator 4 having a cylindrical shape with a bottom was disposed in the center of the positive electrode mixture 2 disposed in the battery case 1, and the electrolyte prepared in (4) was injected into the separator 4. At this time, a KOH concentration in the electrolyte was 34 wt% and the electrolyte was containing 2.5 wt% of zinc oxide. For the amount of the electrolyte to be injected, an optimal amount was estimated so that the amount of the electrolyte is neither too larger nor too small.
As an estimation method, first, a largely excessive amount of the electrolyte was put in the battery case 1 in which the positive electrode and the separator 4 were provided, and a pressure in the battery case 1 was reduced for 1 minute at room temperature so that a gauge pressure was 700 mmHg. Next, the pressure was set back to normal and the battery case 1 was left at rest for 5 minutes. Thereafter, the battery case 1 was put upside down and was shaken in a predetermined manner to remove an excess of the electrolyte (which could not be injected into the positive electrode and the separator 4). Then, the amount of the electrolyte which was not removed and left in the battery case 1 was assumed to be an optimal injection amount.
The electrolyte was injected to the battery case 1 in the above-described manner and then decompression treatment was performed. After a certain amount of time was elapsed from the decomposition treatment, the gelled negative electrode 3 obtained in the above-described step was filled in the separator 4. Note that a nonwoven cloth containing polyvinyl alcohol fiber and rayon fiber as main constituents was used as the separator 4.
A negative electrode current collector 6 was inserted in the center of the gelled negative electrode 3. Note that a gasket 5 and a bottom plate 7 serving as a negative electrode terminal were connected to the negative electrode current collector 6 in advance so as to be united as one. An opening end portion of the battery case 1 was crimped to a peripheral portion of the bottom plate 7 with an end portion of the gasket 5 interposed therebetween, and an opening portion of the battery case 1 was sealed. Lastly, an outer surface of the battery case 1 was coated by an exterior label 8, thereby obtaining an alkaline battery (hereinafter referred to as a "battery").

Example 2

Except that the sulfuric acid concentration in the electrolyte bath was set to be 50 g/L, the electrolysis temperature was set to be $95 \pm 1.0$ °C, and the electrolytic current density was set to be 50 A/m$^2$ in producing manganese dioxide, a battery was obtained in the same manner as in Example 1.

Example 3

Except that the sulfuric acid concentration in the electrolyte bath was set to be 70 g/L, the electrolysis temperature was set to be $95 \pm 1.0$ °C, and the electrolytic current density was set to be 50 A/m$^2$ in producing manganese dioxide, a battery was obtained in the same manner as in Example 1.

Example 4

Except that the sulfuric acid concentration in the electrolyte bath was set to be 75 g/L, the electrolysis temperature was set to be $92 \pm 1.0$ °C, and the electrolytic current density was set to be 50 A/m$^2$ in producing manganese dioxide, a battery was obtained in the same manner as in Example 1.

Example 5

Except that the sulfuric acid concentration in the electrolyte bath was set to be 80 g/L, the electrolysis temperature was set to be $90 \pm 1.0$ °C, and the electrolytic current density was set to be 55 A/m$^2$ in producing manganese dioxide, a battery was obtained in the same manner as in Example 1.

Example 6

Except that 21 parts by weight of nickel oxyhydroxide powder, 6 parts by weight of artificial graphite (SP20 manufactured by Nippon Graphite Industries. Ltd.), 0.2 parts by weight of calcium hydroxide (as an additive for preventing deterioration of storage characteristic), and 0.5 parts by weight of polyethylene powder (as a binder) were added to 75 parts by weight of manganese dioxide in forming a positive electrode mixture, a battery was obtained in the same manner as in Example 1.

(Comparative Example 1)

Except that the sulfuric acid concentration in the electrolyte bath was set to be 15 g/L, the electrolysis temperature was set to be 95 $\pm$ 1.0 °C, and the electrolytic current density was set to be 40 A/m$^2$ in producing manganese dioxide, a battery was obtained in the same manner as in Example 1.

(Comparative Example 2)

Except that 21 parts by weight of nickel oxyhydroxide powder, 6 parts by weight of artificial graphite (SP20 manufactured by Nippon Graphite Industries. Ltd.), 0.2 parts by weight of calcium hydroxide (as an additive for preventing deterioration of storage characteristic), and 0.5 parts by weight of polyethylene powder (as a binder) were added to 75 parts by weight of manganese dioxide in forming a positive electrode mixture, a battery was obtained in the same manner as in Example 1.

(6) Measurement of weight reduction percentage of manganese dioxide and X-ray powder diffraction measurement

Measurement of the weight reduction percentage of manganese dioxide and X-ray powder diffraction measurement were performed to manganese dioxide powder produced according to the above-described method.

(a) A method for measurement of the weight reduction percentage of manganese dioxide due to heating

The weight reduction percentage of manganese dioxide was measured using thermogravimetrical analysis. Specifically, thermogravimetrical analysis was performed using "Thermoplus TG-DTA" manufactured by Rigaku Corporation under the following conditions.
As a sample container and a reference container, alumina sample pans were used. In the sample container, 9.5 to 11.0 mg of manganese dioxide powder was put, and alumina powder was put in the reference container. With air blown at 100 ml/min, the temperature was increased from room temperature to 500 °C at a temperature increase rate of 10 °C/min. The weight reduction percentage of manganese dioxide was calculated by substituting the weights of manganese dioxide obtained at room temperature, 100 °C and 400 °C to the above-described Formula 1.
Note that in this measurement, a graph of data obtained from thermogravimetrical analysis which was performed without putting manganese dioxide in the sampling pan was assumed as a baseline and the baseline was subtracted from actual measurement data for manganese dioxide, thereby correcting the baseline with respect to the actual measurement data for manganese dioxide.

(b) Method for measuring peak position of diffraction plane and intensity ratio in X-ray powder diffraction measurement

Using CuK$\alpha$ as a radiation source of X-ray, a peak position of a diffraction plane with Miller indices (110) was measured and also peak intensity ratio was obtained. Specifically, X-ray powder diffraction measurement was performed using RINT2000 manufactured by Rigaku Corporation under the following conditions.
Cu-K$\alpha$1 (having a wavelength of 1.5405 A) was used as a radiation source of X-ray, a tube voltage was 40 kV, a current was 150 mA, a divergence slit was 0.5°, a scattering slit was 0.5°, and a light receiving slit width was 0.3 mm. Scanning was performed under the condition where a scanning speed was 2°/min, a scanning step was 0.05°, and a scanning axis was 2θ/θ. A monochromator was used as a detector.
Miller indices were given to diffraction lines, assuming that the crystal structure of manganese dioxide was a ramsdellite structure. Specifically, a peak where 2θ = 21.0° to 22.5° was determined as a peak for a (110) plane, a peak where 2θ = 33.0° to 36.5° was determined as a peak for a (130) plane, and a peak where 2θ = 36.8° to 37.5° was determined as a peak for a (021) plane.
The peak intensity (cps) was obtained by deducting the following backgrounds from actually measured values shown in the diffraction pattern, respectively. The background of the peak for the (110) plane was a straight line connecting a diffraction line

where 2θ = 17° and a diffraction line where 2θ = 29°. Each of the background of the (130) plane and the background of the (021) plane was a straight line connecting a diffraction line where 2θ = 31.5° and a diffraction line where 2θ = 41.0°. When many peaks overlay, the diffraction lines were modeled using the Pseudo-Voigt function.

Results of measurements are shown in Table 1.

Note that the peak position in Table 1 is the peak position for the plane with Miller indices (110).

[Table 1]

| | Result of thermogravimetrical analysis | Results of X-Ray powder diffraction measurement | |
| --- | --- | --- | --- |
| | Weight reduction percentage of manganese dioxide (%) | Peak position (°) | Peak intensity ratio |
| Example 1 | 3.8 | 21.9 | 0.10 |
| Example 2 | 4.0 | 21.7 | 0.08 |
| Example 3 | 5.0 | 20.9 | 0.06 |
| Example 4 | 5.4 | 20.5 | 0.03 |
| Example 5 | 5.7 | 20.2 | 0.02 |
| Example 6 | 4.0 | 21.7 | 0.08 |
| Comparative Example 1 | 3.2 | 22.1 | 0.16 |
| Comparative Example 2 | 3.2 | 22.1 | 0.16 |

(7) High load discharge performance and storage characteristic of battery

High load discharge performance and storage characteristic of each of the batteries produced according to the above-described method were examined.

First, the initial discharge performance was obtained. Specifically, after being assembled, the batteries were left at rest at room temperature for 10 days and then a test described below was performed to obtain initial discharge performances of the batteries.

The test will be described hereinafter. Assuming that a cycle of 2 seconds with 1500 mW and 28 seconds with 600 mW was as 1 pulse, in an environment at a temperature of 20 °C, a 1-hour discharge pattern in which the cycle was repeated 10 times (5 min) and then a 55 minute halt was given was repeated and the number of pulses was counted until a voltage reached 1.05 V. In this manner, the initial discharge performance was obtained for Examples 1 through 6 and Comparative Examples 1 and 2. In Table 2, as the number of initial discharge pulses for each of the batteries, an index number relative to the discharge performance of the battery of Comparative Example 1 taken as 100 is indicated.

Next, the discharge performance after storage was obtained. Specifically, after being assembled, the batteries were left at rest at room temperature for 10 days, were stored in a constant temperature bath at a temperature of 60 °C for 7 days, and then were left for 1 day at room temperature. Then, the above-described test was performed to the batteries to obtain discharge performances after storage for the batteries of Examples 1 through 6 and Comparative Examples 1 and 2. In Table 2, as the number of discharge pulses after storage for each of the batteries, an index number relative to the initial discharge performance of the battery of Comparative Example 1 taken as 100 is indicated. Moreover, the ratio of the discharge performance after storage to the initial discharge performance for each of the batteries was shown as the storage characteristic in Table 2.

[Table 2]

| | Number of initial pulses | Number of pulses after storage | Storage characteristic |
| --- | --- | --- | --- |
| Example 1 | 102 | 74 | 73 |
| Example 2 | 104 | 79 | 76 |
| Example 3 | 106 | 81 | 76 |
| Example 4 | 104 | 77 | 74 |
| Example 5 | 101 | 72 | 71 |

(continued)

|  | Number of initial pulses | Number of pulses after storage | Storage characteristic |
|---|---|---|---|
| Example 6 | 99 | 76 | 77 |
| Comparative Example 1 | 100 | 69 | 69 |
| Comparative Example 2 | 95 | 66 | 69 |

Based on the results shown in Table 1 and Table 2, in order to improve both the initial discharge performance of a battery and the discharge performance thereof after storage, manganese dioxide preferably exhibits a numerical value shown below as its weight reduction percentage.

Specifically, when manganese dioxides of Example 1 through Example 6 are used, both the initial discharge performance and the discharge performance after storage are high, compared to the case where manganese dioxide of Comparative Example 1 is used. When manganese dioxides of Example 2 through Example 4 (i.e., manganese dioxides of which the weight reduction percentage is 4.0 wt% or more and 5.4 wt% or less) are used, the storage characteristic is higher than the discharge performances obtained when manganese dioxides of Examples 1, 5 and 6 are used. Therefore, Examples 2 through 4 are preferable.

In each of Example 6 and Comparative Example 2, the ratio of nickel oxyhydroxide to manganese dioxide is small. Even for the batteries having such configuration, the battery of Example 6 has a higher storage characteristic than that of the battery of Comparative Example 2.

Based on the results shown in Table 1 and Table 2, in order to improve the initial discharge performance of a battery and the discharge performance thereof after storage, it is preferable that the peak position for the (110) plane is 20.5 degrees or more and 21.7 degrees or less and the peak intensity ratio is 0.1 or less.

Note that in this embodiment, the case where (manganese dioxide):(nickel oxyhydroxide) = 56:38 and the case where (manganese dioxide):(nickel oxyhydroxide) = 75:21 have been described. The present inventors confirmed that the same effects could be achieved when the ratio of manganese dioxide to nickel oxyhydroxide was in a ranged from 30:70 to 80:20.

Based on what has been described above, it is understood that in an alkaline battery using a positive electrode containing manganese dioxide and nickel oxyhydroxide as an active material, the storage characteristic can be improved by using as manganese dioxide epsilon-manganese dioxide formed of smaller crystallites than crystallites of known gamma-manganese dioxide.

INDUSTRIAL APPLICABILITY

As has been described, the alkaline battery of the present invention exhibits excellent high load discharge performance and storage characteristic, and therefore can be preferably used for a device, such as a digital still camera and the like, using a large current.

**Claims**

1.  An alkaline battery comprising:

    a positive electrode containing, as a positive electrode active material, manganese dioxide and nickel oxyhydroxide; and
    an alkaline electrolyte,

    wherein when the manganese dioxide is heated, a weight reduction percentage of the manganese dioxide at a temperature within a range of 100 °C or more and 400 °C or less is 3.8 wt% or more.

2.  The alkaline battery of claim 1, wherein the weight reduction percentage of the manganese dioxide is 4.0 wt% or more and 5.4 wt% or less.

3.  An alkaline battery comprising:

    a positive electrode containing as a positive electrode active material manganese dioxide and nickel oxyhydroxide; and

an alkaline electrolyte,
wherein when the manganese dioxide is subjected to X-ray powder diffraction measurement, a peak position of a diffraction plane with Miller indices of (110) is 20.5 degrees or more and 21.7 degrees or less, and a ratio (I(130)/I(021)) of a peak intensity I (130) of a diffraction plane with miller indices (130) to a peak intensity I(021) of a diffraction plane with Muller indices of (021) is 0.1 or less.

# FIG. 1

## INTERNATIONAL SEARCH REPORT

| | International application No. |
|---|---|
| | PCT/JP2007/069992 |

A. CLASSIFICATION OF SUBJECT MATTER
*H01M4/06*(2006.01)i, *H01M4/50*(2006.01)i

According to International Patent Classification (IPC) or to both national classification and IPC

B. FIELDS SEARCHED

Minimum documentation searched (classification system followed by classification symbols)
H01M4/06, H01M4/50

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-108083 A (Mitsui Mining & Smelting Co., Ltd.),<br>20 April, 2006 (20.04.06),<br>Claim 4; Par. Nos. [0016] to [0041]; table 1<br>(Family: none) | 1-2<br>3 |
| Y | Kazumasa SUETSUGU, Kazuo SEKIYA, Takayuki SHOJI, Tosoh Research & Technology Review, 2005, Vol.49, pages 21 to 27 | 3 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 November, 2007 (26.11.07) | Date of mailing of the international search report<br>11 December, 2007 (11.12.07) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/069992 |

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
     "A special technical feature" in the invention of claims 1 to 2 relates to "an alkaline battery which, when manganese dioxide is heated, exhibits a manganese dioxide weight reduction of not less than 3.8% by weight in the temperature range of 100°C to 400°C". "A special technical feature" in the invention of claim 3 relates to "an alkaline battery wherein, when manganese dioxide is analyzed by powder X-ray diffractometry, the peak position of a diffraction face having Miller indices of (110) is not less than 20.5 degrees and not more than 21.7 degrees and the ratio of peak intensity I(130) of a diffraction face having Miller indices of (130) to peak intensity I(021)
(continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2007/069992

Continuation of Box No.III of continuation of first sheet(2)

of a diffraction face having Miller indices of (021), i.e., I(130)/I(021), is not more than 0.1". There is no technical relationship between the inventions involving one or more of the same or corresponding special technical features, so that they are not considered as being so linked as to form a single general inventive concept.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006012670 A
- JP 2003234107 A
- JP 2001015106 A
- JP 2004186127 A

**Non-patent literature cited in the description**

- **Y. Chabre ; J. Pannetier.** *Prog. Solid St. Chem.,* 1995, vol. 23 (1), 1-130